# EUROPEAN PATENT APPLICATION

(11) **EP 2 333 539 A1**
(43) Date of publication of application: **15.06.2011**
(21) Application number: 10194013.8
(22) Date of filing: 07.12.2010
(51) Int. Cl.: G01N 30/56, G01N 30/60, B01D 15/22, B01D 15/32

(54) **Gas chromatograph column and fabricating method thereof**

(30) Priority: 08.12.2009 JP 2009278192; 29.11.2010 JP 2010265132
(71) Applicant: Yokogawa Electric Corporation, Tokyo 180-8750 (JP)
(72) Inventor: Suzuki, Kentaro, Musashino-shi Tokyo 180-8750 (JP); Kishi, Naoki, Musashino-shi Tokyo 180-8750 (JP); Hara, Hitoshi, Musashino-shi Tokyo 180-8750 (JP); Watanabe, Tetsuya, Musashino-shi Tokyo 180-8750 (JP)
(74) Representative: Grünecker, Kinkeldey, Stockmair & Schwanhäusser Anwaltssozietät

(57) **Abstract**

There is provided a gas chromatograph column. The gas chromatograph column includes: a flow passage through which gas subjected to gas chromatography is absorbed, wherein an inner wall surface of the flow passage is at least partially provided with a plurality of pores whose sizes are substantially uniform. The gas chromatograph column further includes: a first substrate made of silicon and provided with a groove therein; a second substrate disposed on the first substrate to cover the groove; and a porous layer having the pores therein and formed on an inner wall surface of the groove.

## Description

This application claims priority from Japanese Patent Applications No. 2009-278192, filed on Dec. 8, 2009, and No. 2010-265132, filed on Nov. 29, 2010, the entire contents of which are herein incorporated by reference.

### BACKGROUND

### Technical Field

The present disclosure relates to a gas chromatograph column and a fabricating method thereof.

For example, the present disclosure relates to an absorption column used in a gas chromatography apparatus, and more specifically relates to enhancement in performance of an absorption packed column or an absorption capillary column (PLOT, Porous Layer Open Tubular) used in gas chromatography.

### Related Art

A gas chromatography apparatus has been an indispensable apparatus in the field of chemical analysis since the apparatus has been used as a gas component measurement apparatus and has been used to obtain the degree of absorption between various substances existing in a mixture and a stationary phase substance existing in a column, thus conducting an analysis on each substance in the mixture.

In this gas chromatography apparatus, a column such as one described above is provided in a constant temperature bath, and gas such as helium is introduced into this column from a gas cylinder while being adjusted by a pressure reducing valve; in addition, a sample is introduced through a sample inlet, and the sample that has passed through the column is analyzed by a detector in order to identify a substance from a difference in time taken to pass through the column.

In this regard, gas chromatograph columns used in gas chromatography apparatuses are broadly divided into: a packed column that is used by filling an absorbent into a minute flow passage (tube); and a capillary column that is used by applying an absorbent to an inner wall of a hollow minute flow passage (tube).
Further, typical column sizes are as follows. A packed column has an inner diameter of about 3 mm and a length of about 2 m, and a capillary column has an inner diameter of about 0.25 mm and a length of about 30 m to about 60 m.

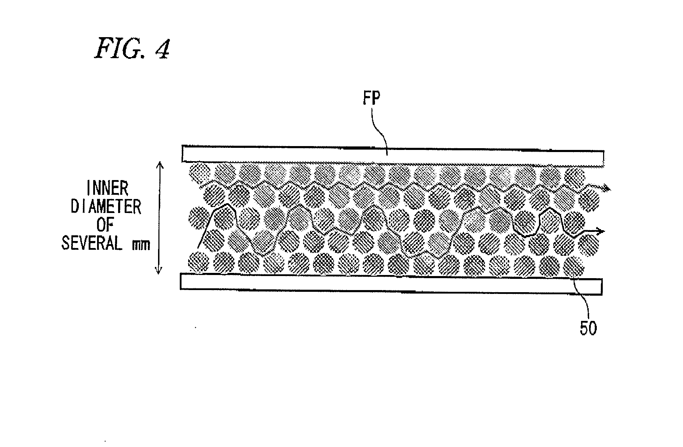

FIG. 4 is a schematic diagram illustrating a related-art packed column such as one described above. In FIG. 4, the related-art packed column is formed by filling (packing) an absorbent 50 into a minute flow passage (tube) FP.
Specifically, in the related-art packed column, a substance obtained by impregnating a carrier with low volatility liquid (which will be referred to as stationary phase liquid or liquid phase), or an absorbent such as activated carbon, alumina or silica gel is packed into the minute flow passage formed by a glass tube or a metal tube.

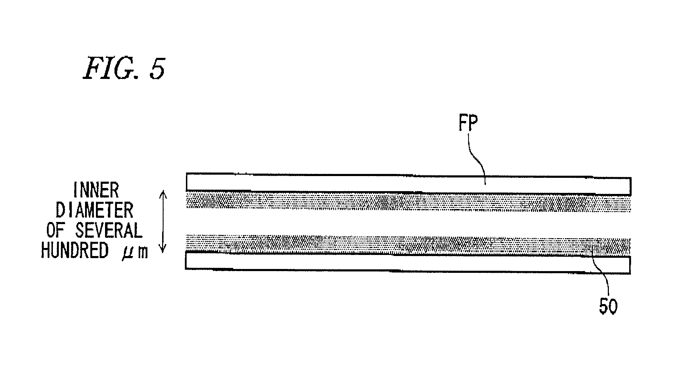

FIG. 5 is a schematic diagram illustrating a related-art capillary column such as one described above. In FIG. 5, the capillary column is formed by applying an absorbent 50 to an inner wall of a hollow minute flow passage (tube) FP.
Specifically, examples of the related-art capillary column include: a WCOT (Wall Coated Open Tubular) type in which liquid phase is applied to an inner wall of a minute flow passage FP having an inner diameter of about 0.1 mm to about 1 mm; a PLOT (Porous Layer Open Tubular) type in which particulate porous polymer, alumina or the like having a diameter of several µm is carried in the form of a layer of about 5 µm to about 20 µm by a tube wall; and a SCOT (Support Coated Open Tubular) type in which a substance, obtained by impregnating a diatomaceous earth carrier having a grain size of several dozen µm with liquid phase, is carried in the form of a layer of several hundred µm by an inner wall.

When a column has a capillary structure, a flow passage resistance is low, and the time taken to pass through the column is short. Hence, a capillary column has been advantageous in enabling a high speed chromatography analysis.

Hereinafter, operations of a gas chromatography apparatus for performing gas mixture separation using a packed column or capillary column having the above-described structure will be described by way of example.
For example, an inert gas (mobile phase) such as helium is steadily flowed into a minute flow passage of the packed column or capillary column, and a gas mixture serving as a sample for gas chromatography is flowed into the minute flow passage of the packed column or capillary column.

The gas mixture serving as a sample for gas chromatography flows into the minute flow passage of the packed column or capillary column via an flow inlet 100 (not shown), and then flows through the minute flow passage of the packed column or capillary column while repeating absorption/desorption between an absorbent (stationary phase) packed into the minute flow passage or applied to an inner wall thereof and the inert gas (mobile phase) due to respective properties of gases contained in the gas mixture.

In accordance with the ease of absorption/desorption of each type of gas contained in the gas mixture, a moving speed of the gas having a high absorptive property is low while a moving speed of the gas having a low absorptive property is high when the gas mixture moves through the column; therefore, a speed difference occurs between intrinsic gases, and the gases are discharged through a flow outlet 200 of the column in order of increasing absorptive property.
Hence, when the gases flowed out of the column are analyzed by a detector in the gas chromatography apparatus, the gas mixture, i.e., each type of gas contained in the gas mixture (each gas component contained in the gas mixture), can be analyzed.

As a result, the gas chromatography apparatus in which the related-art packed column or capillary column is used is capable of performing gas mixture separation and conducting an analysis on each gas component.

For example, following documents are related to the foregoing gas chromatograph column.
(i) Toshihide Ihara, et al., "Capillary Gas Cbromatography", Asakura Publishing Co., Ltd., July 20, 1997, pp. 1-53
(ii) Sho Nishiyama, et al., "Parylene Stationary Phase for Micro Gas Chromatography Columns", THE 25TH SENSOR SYMPOSIUM, 2008, pp.154-157
(iii) T. Nakai, et al., "Micro fabricated Semi-Packed Gas Chromatography Column with Functionalized Parylene as the Stationary Phase", Twelfth International Conference on Miniaturized Systems for Chemistry and Life Sciences, 2008, pp. 1790-1792

However, in the above related-art packed column, there exist a plurality of flow passage lengths which are formed by the packed absorbent and through which gases flow; therefore, even when attention is given to one gas component, there exist a region through which the gas component flows out rapidly and a region through which the gas component flows out slowly, resulting in a problem that a separation peak in chromatography is broadened (which will be referred to as "multi-flow passage diffusion").
As a result, the broadening of a separation peak in chromatography has been making it difficult to conduct an accurate gas analysis, and has been problematic in this respect.

On the other hand, in the above related-art capillary column, the adhesion between the absorbent and the inner wall of the minute flow passage is low, resulting in a problem that the absorbent is peeled off due to a temperature cycle. Upon peeling off of the absorbent in this manner, there have occurred problems such as reduction in reproducibility of separation and blockage of the minute flow passage and/or detector.

Furthermore, in the above related-art column, the absorbent such as activated carbon is used, thus causing a problem that pores of varying sizes, through which the gas serving as a sample is absorbed, are distributed, resulting in a cause of broadening of a peak separation.

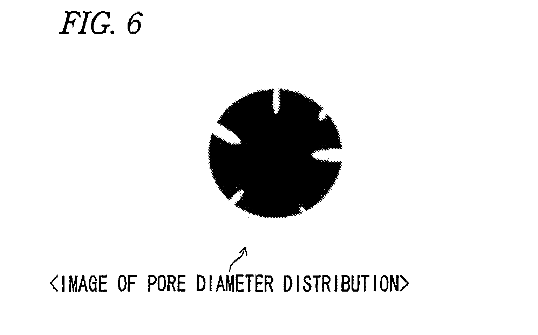

FIG. 6 is an explanatory diagram illustrating pore sizes of the absorbent in the related-art column. As illustrated in FIG. 6, in the absorbent such as activated carbon, pores through which gas is absorbed are formed in such a manner that the pores having varying sizes, varying depths, varying diameters, etc. are distributed.
Hence, even when attention is given to one of gas components contained in the gas serving as a sample, the absorptive property obtained when this gas is absorbed by the absorbent and the time taken for absorption vary, thus causing a problem that a separation peak in chromatography is broadened.

### SUMMARY OF THE INVENTION

Exemplary embodiments of the present invention address the above disadvantages and other disadvantages not described above. However, the present invention is not required to overcome the disadvantages described above, and thus, an exemplary embodiment of the present invention may not overcome any disadvantages

It is one of illustrative aspects of the present invention to provide: a gas chromatograph column capable of reducing broadening of a separation peak in chromatography, improving reproducibility of separation, and preventing a flow passage blockage; and a fabricating method thereof.

According to one or more aspects of the present invention, there is provided a gas chromatography column. The gas chromatograph column includes a flow passage through which gas subjected to gas chromatography is absorbed, wherein an inner wall surface of the flow passage is at least partially provided with a plurality of pores whose sizes are substantially uniform.

According to one or more aspects of the present invention, there is provided a method of fabricating a gas chromatograph column including a flow passage through which gas subjected to gas chromatography is absorbed. The method includes: (a) forming a groove in a first substrate made of silicon; (b) forming a plurality of pores in an inner wall surface of the groove, sizes of the pores being substantially uniform_{;} and (c) bonding a second substrate onto the first substrate such that the groove is covered by the second substrate, thereby forming the flow passage.

According to one or more aspects of the present invention, there is provided a method of fabricating a gas chromatograph column including a flow passage through which gas subjected to gas chromatography is absorbed. The method includes: (a) forming a groove in a first substrate made of silicon; (b) forming an aluminum thin film on an inner wall surface of the groove; (c) forming a plurality of pores in the aluminum thin film, sizes of the pores being substantially uniform; and (d) bonding a second substrate onto the first substrate such that the groove is covered by the second substrate, thereby forming the flow passage.

Other aspects and advantages of the present invention will be apparent from the following description, the drawings and the claims.

### BRIEF DESCRIPTION OF THE DRAWINGS

FIGS. 1A and 1B are schematic diagrams illustrating one example of a gas chromatograph column according to an embodiment of the present invention;
FIGS. 2A to 2D are explanatory diagrams (cross-sectional views) illustrating a method for fabricating the gas chromatograph column according to the embodiment;
FIGS. 3A to 3F are explanatory diagrams (cross-sectional views) illustrating another method for fabricating the gas chromatograph column according to the embodiment;
FIG. 4 is a schematic diagram illustrating a related-art packed column;
FIG. 5 is a schematic diagram illustrating a related-art capillary column; and
FIG. 6 is an explanatory diagram illustrating pore sizes of an absorbent in the related-art column.

### DETAILED DESCRIPTION OF EXEMPLARY EMBODIMENTS

Hereinafter, exemplary embodiments of the present invention will be described with reference to the accompanying drawings.

### EXAMPLE 1

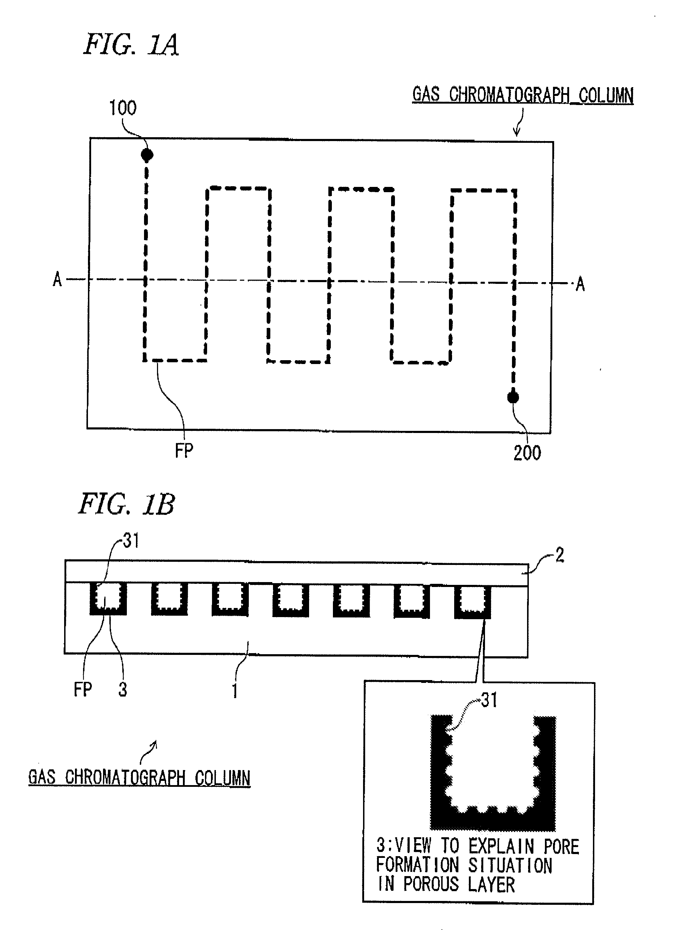

FIGS. 1A and 1B are schematic diagrams illustrating a gas chromatograph column according to an embodiment of the present invention. FIG. 1A is a top view of the column, and FIG. 1B is a cross-sectional view of the column, taken along the line A-A of FIG. 1A.

In FIGS. 1A and 1B, the gas chromatograph column mainly includes: a silicon substrate 1 that is one example of the first substrate having a minute groove for forming a minute flow passage through which gas serving as a sample flows; a substrate 2 that is made of Pyrex (registered trademark) glass or the like and is one example of the second substrate having a flow inlet 100 and a flow outlet 200 and affixed to the silicon substrate 1 to form a minute flow passage FP through which the gas serving as a sample flows; and a porous layer 3 that is provided with uniformly sized pores 31 and is formed porously by anodically oxidizing a surface of the minute groove or forming the surface of the minute groove into a porous structure.

The minute groove is formed in a serpentine or spiral manner at a center portion of the silicon substrate 1, by, for example, a RIE (Reactive Ion Etching) process, ultrasonic processing, laser processing, sandblast processing, wet etching, etc.
The RIE process is a method for utilizing the effect of allowing an etching gas, ionized at relatively low pressure, to perpendicularly collide with a material, to be processed.
Further, this minute groove may be formed to have dimensions such as a width of 50 µm, a depth of 200 µm and a length of 10 m, for example. It should be noted that the groove of the silicon substrate 1 may be formed into a rectangle extended along a longitudinal direction thereof.

The porous layer 3 is formed by anodically oxidizing the surface of the minute groove of the silicon substrate 1 or forming the surface of the minute groove of the silicon substrate 1 into a porous structure in a hydrofluoric acid aqueous solution.
At a surface of this porous layer 3, the pores 31 having uniform dimensions (size), diameter or depth are formed.
At the surface of the porous layer 3, the uniformly sized pores 31, each having a pore diameter of about several nm to about several tens of nm, are formed according to conditions. As illustrated in FIG. 1B, the uniformly sized pores 31 are formed by anodically oxidizing the surface of the minute groove of the silicon substrate 1 or forming the surface of the minute groove of the silicon substrate 1 into a porous structure in a hydrofluoric acid aqueous solution.

As methods for anodically oxidizing the surface of the groove or forming the surface of the groove into a porous structure to form the porous layer 3, the silicon substrate 1 provided with the groove, for example, is impregnated with a hydrofluoric acid mixed solution containing 5% of hydrofluoric acid and 10% of IPA (isopropyl alcohol), and an electrical current is applied to a bottom portion of the groove at 5 mA/cm² for 10 minutes, thereby anodically oxidizing the surface of the groove or forming the surface of the groove into a porous structure.

The porous layer 3 may, for example, made of a material such as porous silicon in which the surface of the minute groove of the silicon substrate 1 is anodically oxidized or formed into a porous structure, or porous aluminum in which an aluminum thin film formed on the surface of the minute groove of the silicon substrate 1 is anodically oxidized or formed into a porous structure in a hydrofluoric acid aqueous solution.

The minute flow passage FP is formed by bonding (e.g,, thermocompression bonding or the like) the silicon substrate 1 and the substrate 2 to each other such that the flow inlet 100 and the flow outlet 200 formed in the substrate 2 are located at ends of the groove formed in the silicon substrate 1, and the groove formed in the silicon substrate 1 is covered with the substrate 2.

Moreover, in the gas chromatograph column according to the present embodiment, the porous layer 3 may be formed in the substrate 2, the porous layer 3 may be formed over the entire surface of the minute flow passage FP, and an inner wall surface of the minute flow passage FP may be partially or entirely provided with a plurality of the uniformly sized pores.
When the porous layer 3 is not formed in the substrate 2, the gas passing through a region located close to the substrate 2 flows out of the column more rapidly. However, when the porous layer 3 is formed in the substrate 2, the flowing speed of the gas becomes more uniform as compared with the foregoing case, and the absorptive property at the time of absorption and the time taken for absorption become constant (substantially constant) or variations thereof are reduced more effectively than the case where the porous layer 3 is formed only in the groove of the silicon substrate 1. Hence, the formation of the porous layer 3 not only in the silicon substrate 1 but also in the substrate 2 is advantageous in enabling a reduction in broadening of a separation peak in chromatography.

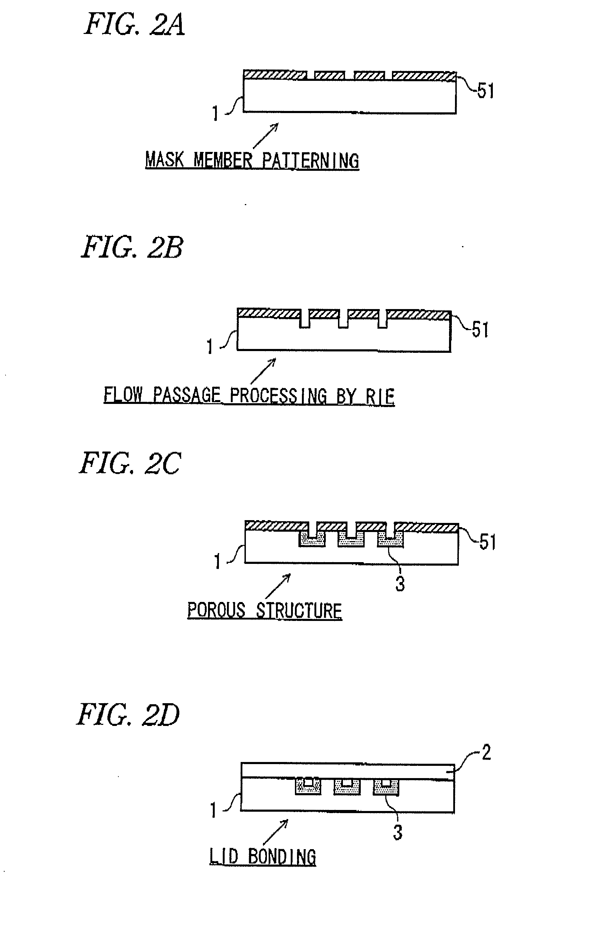

Hereinafter, a method for fabricating the gas chromatograph column according to the embodiment will be now described. FIGS. 2A to 2D are explanatory diagrams (cross-sectional views) illustrating the method for fabricating the gas chromatograph column according to the present embodiment. In FIGS. 2A to 2D, components common to FIGS. 1A and 1B are denoted by the same reference characters, and the description thereof will be omitted herein.
Further, FIGS. 2A, 2B, 2C and 2D are the explanatory diagrams (cross-sectional views) illustrating the respective steps of fabricating the gas chromatograph column.

First of all, as illustrated in FIG. 2A, on the silicon substrate 1, there is formed a first mask member (protective film) 51 in which a hole is formed in a shape (such as a serpentine shape, a spiral shape or a rectangular shape extended along the longitudinal direction of the silicon substrate 1 ) viewed from an upper surface of the minute groove that forms the minute flow passage FP (mask member patterning).
The first mask member 51 may be formed by a hydrofluoric-acid-resistant photoresist, silicon nitride film or the like.

Next, as illustrated in FIG. 2B, a RIE (Reactive Ion Etching) process is performed on the silicon substrate 1 covered with the first mask member (protective film) 51.
Thus, the minute groove for forming the minute flow passage FP is formed in a region of the silicon substrate 1, which is not covered with the first mask member (protective film) 51, i.e., a region of the silicon substrate 1 corresponding to a region of the hole of the first mask member (protective film) 51, which is provided to have the shape viewed from the upper surface of the minute groove that forms the minute flow passage FP.

Furthermore, as illustrated in FIG. 2C, the surface of the minute groove of the silicon substrate 1 is anodically oxidized or formed into a porous structure in a hydrofluoric acid aqueous solution, thereby forming the porous layer 3 provided with the pores 31 having uniform dimensions (size), diameter or depth.
As methods for anodically oxidizing the surface of the groove or forming the surface of the groove into a porous structure to form the porous layer 3, the silicon substrate 1 provided with the groove, for example, may be impregnated with a hydrofluoric acid mixed solution containing about 5% of hydrofluoric acid and about 10% of IPA (isopropyl alcohol), and an electric current is applied to a bottom portion of the groove at 5 mA/cm² for 10 minutes, thereby anodically oxidizing the surface of the groove or forming the surface of the groove into a porous structure.
In this case, anodic oxidation may be performed in a hydrofluoric acid aqueous solution by using the silicon substrate 1 as an anode and using a platinum electrode or the like as a cathode.

Then, as illustrated in FIG. 2D, the silicon substrate 1 and the substrate 2 are bonded (e.g., thermocompression bonding) to each other such that the flow inlet 100 and the flow outlet 200 formed in the substrate 2 are located at the ends of the groove formed in the silicon substrate 1, and the groove formed in the silicon substrate 1 is covered with the substrate 2. Thus, the flow passage FP is formed.
If necessary, the groove formed in the silicon substrate 1 may be covered with the substrate 2 after removing the first mask member (protective film) 51.

Through the fabrication steps illustrated in FIGS. 2A to 2D, the porous layer 3, in which the uppermost surface of the minute groove formed in the silicon substrate 1 is porous silicon, is formed in the gas chromatograph column according to the present embodiment.
In other words, in the gas chromatograph column according to the present embodiment, the inner wall surface of the minute flow passage may be partially or entirely formed by porous silicon.

Accordingly, the gas chromatograph column includes: the first substrate that is made of silicon and provided with the minute groove for forming the minute flow passage; and the porous layer that is provided with the uniformly sized pores and is formed porously by anodically oxidizing the surface of the groove or forming the surface of the groove into a porous structure. According to the embodiment, the inner wall surface of the minute flow passage FP is partially or entirely provided with a plurality of the uniformly sized pores; thus, the absorptive property at the time of absorption and the time taken for absorption become constant (substantially constant) or variations thereof are reduced. Hence, the gas chromatograph column is advantageous in enabling a reduction in broadening of a separation peak in chromatography.
Further, since an absorbent is not applied to an inner wall of the minute flow passage, the gas chromatograph column is advantageous in enabling an improvement in reproducibility of separation.
Furthermore, the gas chromatograph column is also advantageous in that a flow passage blockage can be prevented by providing the foregoing structure.

Moreover, the method of fabricating the gas chromatograph column may include a step of forming the porous layer 3 in the substrate 2.
When the porous layer 3 is not formed in the substrate 2, the gas passing through a region located close to the substrate 2 flows out of the column more rapidly. However, when the porous layer 3 is formed in the substrate 2, the flowing speed of the gas becomes more uniform as compared with the foregoing case, and the absorptive property at the time of absorption and the time taken for absorption become constant (substantially constant) or variations thereof are reduced more effectively than the case where the porous layer 3 is formed only in the groove of the silicon substrate 1. Hence, the formation of the porous layer 3 not only in the silicon substrate 1 but also in the substrate 2 is advantageous in enabling a reduction in broadening of a separation peak in chromatography.

With the above-described structure, the gas chromatograph column is used in a gas chromatography apparatus as described below, for example, to perform gas separation, thereby contributing to gas component analysis.

An inert gas (mobile phase) such as helium is steadily flowed into the minute flow passage of the gas chromatograph column according to the present embodiment. In this situation, a gas mixture serving as a sample for gas chromatography is flowed into the minute flow passage of the gas chromatograph column according to the present embodiment.

Upon flow of the gas mixture, serving as a sample for gas chromatography, into the flow inlet 100 (not shown) of the minute flow passage FP, the gas mixture flows through the minute flow passage FP while repeating absorption/desorption due to properties of respective gases contained in the gas mixture.

Depending on the ease of absorption/desorption of each type of gas contained in the gas mixture, a moving speed of the gas having a high absorptive property is low while a moving speed of the gas having a low absorptive property is high when the gas mixture moves through the column. Therefore, a speed difference occurs between the intrinsic gases, and the gases are discharged through the flow outlet 200 of the column in order of increasing absorptive property.

In this case, when the gas mixture moves through the minute flow passage FP, the gas mixture flows through the minute flow passage FP while repeating absorption/desorption via the porous layer 3 in which the pores provided on the minute groove constituting the minute flow passage FP are formed to have a uniform size. Hence, the absorptive property at the time of absorption and the time taken for absorption will be constant (substantially constant) or variations thereof will be reduced, and broadening of a separation peak in chromatography will be reduced.

Consequently, in the gas chromatography apparatus using the gas chromatograph column, when the gases flowed out of the column are analyzed by a detector, the gas mixture, i.e., each type of gas contained in the gas mixture (each gas component contained in the gas mixture), can be more accurately analyzed.

As a result, the gas chromatograph column according to the present embodiment includes: the first substrate that is made of silicon and provided with the minute groove for forming the minute flow passage; and the porous layer that is provided with the uniformly sized pores and is formed porously by anodically oxidizing the surface of the groove or forming the surface of the groove into a porous structure. Thus, the absorptive property at the time of absorption and the time taken for absorption become constant (substantially constant) or variations thereof are reduced. Hence, the gas chromatograph column is capable of reducing broadening of a separation peak in chromatography.
In other words, in the gas chromatography column according to the present embodiment, since the inner wall surface of the minute flow passage FP is partially or entirely provided with a plurality of the uniformly sized pores, the absorptive property at the time of absorption and the time taken for absorption become constant (substantially constant) or variations thereof are reduced; hence, the gas chromatograph column is advantageous in enabling a reduction in broadening of a separation peak in chromatography.

Further, the gas chromatograph column according to the present embodiment includes: the first substrate that is made of silicon and provided with the minute groove for forming the minute flow passage; and the porous layer that is provided with the uniformly sized pores and is formed porously by anodically oxidizing the surface of the groove or forming the surface of the groove into a porous structure, and therefore, the gas chromatograph column does not have a structure in which an absorbent is applied to an inner wall of the minute flow passage. Hence, the gas chromatograph column is advantageous in enabling an improvement in reproducibility of separation.
Furthermore, the gas chromatograph column is also advantageous in that a flow passage blockage can be prevented by providing the foregoing structure.

In the gas chromatograph column according to the embodiment, carbon, aluminum or alumina may be sputtered on the surface of the porous layer 3, the surface of the porous layer 3 may be oxidized, or the surface of the porous layer 3 may be coated with a solution by which a vitreous material is formable, thereby forming an "absorption performance enhancing layer".

For example, carbon may be sputtered on the porous layer 3 made of porous silicon, i.e., the surface of the minute groove for forming the minute flow passage.
When the "absorption performance enhancing layer" is formed by sputtering carbon on the surface of the porous layer 3 made of porous silicon in this manner, the gas chromatograph column is advantageous in enabling obtainment of absorption performance equivalent to that of activated carbon known as a typical absorbent, and thus can contribute to more accurate gas component analysis.

Further, in the gas chromatograph column, the uppermost surface of the porous layer 3 made of porous silicon (i.e., the surface of the minute groove for forming the minute flow passage), on which aluminum has been sputtered, may be oxidized.
When the "absorption performance enhancing layer" is formed by oxidizing the uppermost surface of the porous layer 3 made of porous silicon (i.e., the surface of the minute groove for forming the minute flow passage), on which aluminum has been sputtered, in this manner, the gas chromatograph column can obtain an absorptive property equivalent to that of alumina known as a typical absorbent, and thus can contribute to more accurate gas component analysis.

Also, according to the gas chromatograph column of the present embodiment, the "absorption performance enhancing layer" may be formed by sputtering alumina on the surface of the porous layer 3 made of porous silicon. With this absorption performance enhancing layer, the gas chromatograph column can obtain an absorptive property (e.g., a property suitable for gas separation between N₂ and O₂, a property capable of preventing the outflow of CO₂ by tightly absorbing CO₂ or the like) equivalent to that of zeolite known as a typical absorbent, and thus can contribute to more accurate gas component analysis.

Furthermore, the porous layer 3 made of porous silicon, i.e., the surface of the minute groove for forming the minute flow passage, may be oxidized, or may be coated with a solution by which a vitreous material such as polysilazane is formable.
In this manner, the porous layer 3 made of porous silicon is oxidized or the porous layer 3 is coated with a solution by which a vitreous material such as polysilazane is formable, thereby forming the "absorption performance enhancing layer"; thus, the gas chromatograph column can obtain an absorptive property equivalent to that of silica gel known as a typical absorbent, and can contribute to more accurate gas component analysis.

Moreover, when the surface of the minute groove of the silicon substrate 1 is anodically oxidized or formed into a porous structure, the pore size can be adjusted depending on a current density and/or a hydrofluoric acid concentration, and selectivity for gases can be changed.

In the gas chromatograph column according to the present embodiment, the inner wall surface of the minute flow passage may be partially or entirely formed by porous aluminum (i.e., aluminum that is anodically oxidized or formed into a porous structure).

### EXAMPLE 2

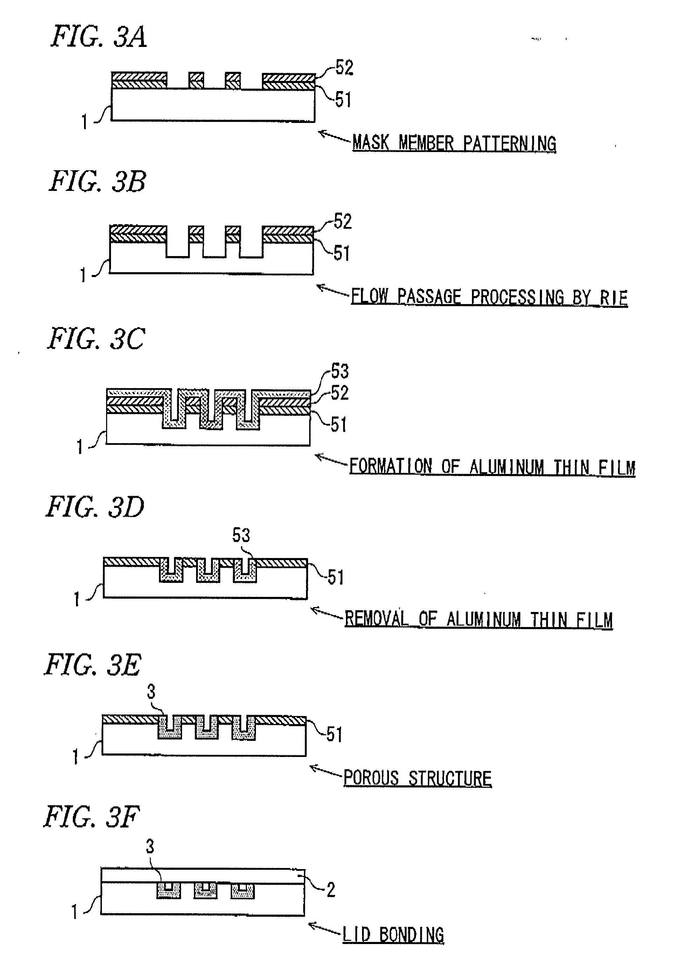

FIGS. 3A to 3F are explanatory diagrams (cross-sectional views) illustrating another method of fabricating the gas chromatograph column according to the embodiment, in which an inner wall surface of a minute flow passage is partially or entirely formed by porous aluminum. In FIGS. 3A to 3F, components common to FIGS. 1A and 1B and FIGS. 2A to 2D are denoted by the same reference characters, and the description thereof will be omitted herein.
Further, FIGS. 3A, 3B, 3C, 3D, 3E and 3F are the explanatory diagrams (cross-sectional views) illustrating respective steps of fabricating the gas chromatograph column.

First, as illustrated in FIG. 3A, on a silicon substrate 1, there is formed a first mask member (protective film) 51 in which a hole is formed in a shape (such as a serpentine shape, a spiral shape or a rectangular shape extended along a longitudinal direction of the silicon substrate 1) when viewed from an upper surface of a minute groove that forms a minute flow passage FP (first mask member patterning).
Furthermore, on the first mask member (protective film) 51, there is formed a second mask member (protective film) 52 in which a hole is formed in the shape viewed from the upper surface of the minute groove that forms the minute flow passage FP (second mask member patterning).

Next, as illustrated in FIG. 3B, a RIE process is performed on the silicon substrate 1 covered with the first and second mask members (protective films) 51 and 52.
Thus, the minute groove for forming the minute flow passage FP is formed in a region of the silicon substrate 1, which is not covered with the first and second mask members (protective films) 51 and 52, i.e., a region of the silicon substrate 1 corresponding to regions of the holes of the first and second mask members (protective films) 51 and 52, each of which is formed to have the shape viewed from the upper surface of the minute groove that forms the minute flow passage FP.

Then, as illustrated in FIG. 3C, an aluminum thin film 53 is formed over the surface of the first mask member (protective film) 51, the surface of the second mask member (protective film) 52, and the surface of the minute groove of the silicon substrate 1.

Subsequently, as illustrated in FIG. 3D, the aluminum thin film 53 formed on the surface of the second mask member (protective film) 52, and the second mask member (protective film) 52 are removed.
That is, the aluminum thin film 53 is formed only on the surface of the minute groove of the silicon substrate 1.

Moreover, as illustrated in FIG. 3E, the aluminum thin film 53 formed on the surface of the minute groove of the silicon substrate 1 is anodically oxidized or formed into a porous structure in a hydrofluoric acid aqueous solution, thereby forming a porous layer 3 provided with uniformly sized pores 31.
As methods for anodically oxidizing the surface of the groove or forming the surface of the groove into a porous structure to form the porous layer 3, the aluminum thin film 53 formed on the surface of the groove of the silicon substrate 1 may, for example, be impregnated with a hydrofluoric acid mixed solution containing about 5% of hydrofluoric acid and about 10% of IPA (isopropyl alcohol), and an electrical current may be applied to the aluminum thin film 53 at 5 mA/cm² for 10 minutes, for example, thereby anodically oxidizing the surface of the groove or forming the surface of the groove into a porous structure.

Then, as illustrated in FIG. 3F, the silicon substrate 1 and a substrate 2 are bonded (e.g., thermocompression bonding) to each other such that a flow inlet 100 and a flow outlet 200 formed in the substrate 2 are located at ends of the groove formed in the silicon substrate 1, and the groove formed in the silicon substrate 1 is covered with the substrate 2. Thus, the flow passage FP is formed.
If necessary, the groove formed in the silicon substrate 1 may be covered with the substrate 2 after removing the first mask member (protective film) 51.

Through the fabrication steps illustrated in FIGS. 3A to 3F, the porous layer 3, in which the uppermost surface of the minute groove formed in the silicon substrate 1 is porous aluminum, is formed in the gas chromatograph column according to the present embodiment.
In other words, in the gas chromatograph column according to the present embodiment, the inner wall surface of the minute flow passage is partially or entirely formed by porous aluminum.

Further, the operations and effects of the gas chromatograph column are similar to those of the gas chromatograph column illustrated in FIGS. 1A and 1B, and therefore, the description thereof will be omitted.

As a result, the gas chromatograph column includes: the first substrate that is made of silicon and provided with the minute groove for forming the minute flow passage; and the porous layer that is provided with the uniformly sized pores and is formed porously by anodically oxidizing the surface of the groove or forming the surface of the groove into a porous structure. Thus, the absorptive property at the time of absorption and the time taken for absorption become constant (substantially constant) or variations thereof are reduced. Hence, in the gas chromatograph column according to the present embodiment, it is possible to reduce broadening of a separation peak in chromatography.
Namely, in the gas chromatograph column according to the present embodiment, since the inner wall surface of the minute flow passage FP is partially or entirely provided with a plurality of the uniformly sized pores, the absorptive property at the time of absorption and the time taken for absorption become constant (substantially constant) or variations thereof are reduced; hence, the gas chromatograph column is advantageous in that it is possible to reduce broadening of a separation peak in chromatography.

Further, the gas chromatograph column includes: the first substrate that is made of silicon and provided with the minute groove for forming the minute flow passage; and the porous layer that is provided with the uniformly sized pores and is formed porously by anodically oxidizing the surface of the groove or forming the surface of the groove into a porous structure, and therefore, the gas chromatograph column does not have a structure in which an absorbent is applied to an inner wall of the minute flow passage. Hence, the gas chromatograph column is advantageous in an improvement in reproducibility of separation.
Furthermore, the gas chromatograph column is also advantageous in that a flow passage blockage can be prevented by providing the foregoing structure.

In the gas chromatograph column, the surface of the porous layer 3 may be oxidized, thereby forming an "absorption performance enhancing layer".

For example, in the gas chromatograph column according to Example 2, the surface of the porous layer 3 made of porous aluminum (i.e., the surface of the minute groove for forming the minute flow passage) may be oxidized.
When the "absorption performance enhancing layer" is formed by oxidizing the surface of the porous layer 3 made of porous aluminum (i.e., the surface of the minute groove for forming the minute flow passage) in this manner, the gas chromatograph column can obtain an absorptive property equivalent to that of alumina known as a typical absorbent, and thus can contribute to more accurate gas component analysis.

While the present invention has been shown and described with reference to certain exemplary embodiments thereof, other implementations are within the scope of the claims. It will be understood by those skilled in the art that various changes in form and details may be made therein without departing from the spirit and scope of the invention as defined by the appended claims.

## Claims

1. A gas chromatograph column, comprising:
a flow passage through which gas subjected to gas chromatography is absorbed, wherein an inner wall surface of the flow passage is at least partially provided with a plurality of pores whose sizes are substantially uniform.

2. The gas chromatograph column according to claim 1, further comprising:
a first substrate made of silicon and provided with a groove therein;
a second substrate disposed on the first substrate to cover the groove; and
a porous layer having the pores therein and formed on an inner wall surface of the groove,
wherein the flow passage comprises: the groove; the porous layer; and a surface of the second substrate facing the groove.

3. A method of fabricating a gas chromatograph column including a flow passage through which gas subjected to gas chromatography is absorbed, the method comprising:
(a) forming a groove in a first substrate made of silicon;
(b) forming a plurality of pores in an inner wall surface of the groove, sizes of the pores being substantially uniform; and
(c) bonding a second substrate onto the first substrate such that the groove is covered by the second substrate, thereby forming the flow passage.

4. The method according to claim 3, wherein step (b) comprises:
anodically oxidizing the inner wall surface of the groove to form the plurality of pores.

5. The method according to claim 3, further comprising: (d) performing any one of following steps after step (b):
(i) sputtering carbon, aluminum or alumina on the inner wall surface of the groove;
(ii) oxidizing the inner wall surface of the groove; and
(iii) coating the inner wall surface of the groove with a solution by which a vitreous material is formable.

6. A method of fabricating a gas chromatograph column including a flow passage through which gas subjected to gas chromatography is absorbed, the method comprising:
(a) forming a groove in a first substrate made of silicon;
(b) forming an aluminum thin film on an inner wall surface of the groove;
(c) forming a plurality of pores in the aluminum thin film, sizes of the pores being substantially uniform; and
(d) bonding a second substrate onto the first substrate such that the groove is covered by the second substrate, thereby forming the flow passage.

7. The method according to claim 6, wherein step (c) comprises:
anodically oxidizing the aluminum thin film to form the plurality of pores.

8. The method according to claim 6, further comprising:
(d) performing any one of following steps after step (c):
(i) sputtering carbon, aluminum or alumina on a surface of the aluminum thin film;
(ii) oxidizing the surface of the aluminum thin film; and
(iii) coating the surface of the aluminum thin film with a solution by which a vitreous material is formable.
